Europäisches Patentamt

(19) European Patent Office

Office européen des brevets

(11) Publication number: **0 202 757**
**B1**

## (12) EUROPEAN PATENT SPECIFICATION

(45) Date of publication of the patent specification:
28.06.89

(51) Int. Cl.⁴: **B60R 1/08**

(21) Application number: 86302737.1

(22) Date of filing: 14.04.86

(54) Anti-glare mirror.

(30) Priority: 19.04.85 GB 8510042

(43) Date of publication of application:
26.11.86 Bulletin 86/48

(45) Publication of the grant of the patent:
28.06.89 Bulletin 89/26

(84) Designated Contracting States:
DE FR GB

(56) References cited:
FR-A- 1 564 799
US-A- 4 448 488

PATENT ABSTRACTS OF JAPAN, vol. 8,
no. 195 (M-323)[1632], 7th September 1984; & JP - A
- 59 84641 (ICHIKO KOGYO K.K.) 16-05-1984

(73) Proprietor: BRITAX (WINGARD) LIMITED, Chandler
Road, Chichester West Sussex PO19 2UG(GB)

(72) Inventor: Bottrill, John, Moelfre 9 Langdale Avenue,
Chichester West Sussex(GB)

(74) Representative: Hollinghurst, Antony, Britax Limited
Patent Department, Chichester West Sussex
PO19 2AQ(GB)

## Description

This invention relates to an anti-glare mirror for a motor vehicle having a prism mirror incorporated therein and a tilting device for moving the prism mirror between its position of normal use and its anti-glare position, the tilting device including a cam arranged to be driven by an electric motor and engaging with a cam follower coupled to the prism mirror.

A mirror of this type is disclosed in US-A-4448488. The electric motor is a reversible electric motor and an associated control circuit is arranged to cause the motor in one rotation to move the prism mirror from its normal position to its anti-glare position and to rotate in the other direction to move the prism mirror back to its normal position. The present invention provides a mirror of the foregoing type employing a unidirectional electric motor.

According to the invention, in a rearview mirror of the foregoing type, the motor is adapted to rotate in one direction only and the cam has a first zone of constant projection which, when engaged by the cam follower, causes the prism mirror to take up its normal orientation, a second zone of constant projection which, when engaged by the cam follower, causes the prism mirror to take up its anti-glare orientation, a first ramp leading from a first end of the first zone to a first end of the second zone and a second ramp leading from a second end of the second zone to a second end of the first zone, and switch means are arranged to interrupt the supply of electric current to the motor when the cam follower is in engagement either with the first zone of constant projection or with the second zone of constant projection.

Preferably additional cam formations are provided on the cam to operate said switch means.

In one form of the invention, the first ramp slopes at a steeper angle than the second ramp and the motor is arranged to rotate the cam in a direction such that the cam follower engages with the first ramp as the prism mirror is moved from its normal orientation to its anti-glare orientation, thus providing a relatively rapid transition in the event that glare is encountered.

If the cam follower is spring-biased into engagement with the cam and the arrangement is such that the spring is stretched to a greater extent when the mirror is in its normal orientation than when it is in its anti-glare orientation, advantage can be taken of the relatively gently sloping ramp with which the cam follower engages as the spring is stretched to reduce the required power of the motor.

An embodiment of the invention will now be described, by way of example, with reference to the accompanying drawings in which;

Figure 1 is front elevational view of an anti-glare mirror in accordance with the invention;
Figure 2 is a cross-sectional view taken on the line 2 - 2 in Figure 1; and
Figure 3 is an exploded perspective view of the motor, the cam and the cam follower, showing the associated electrical circuit conventionally.

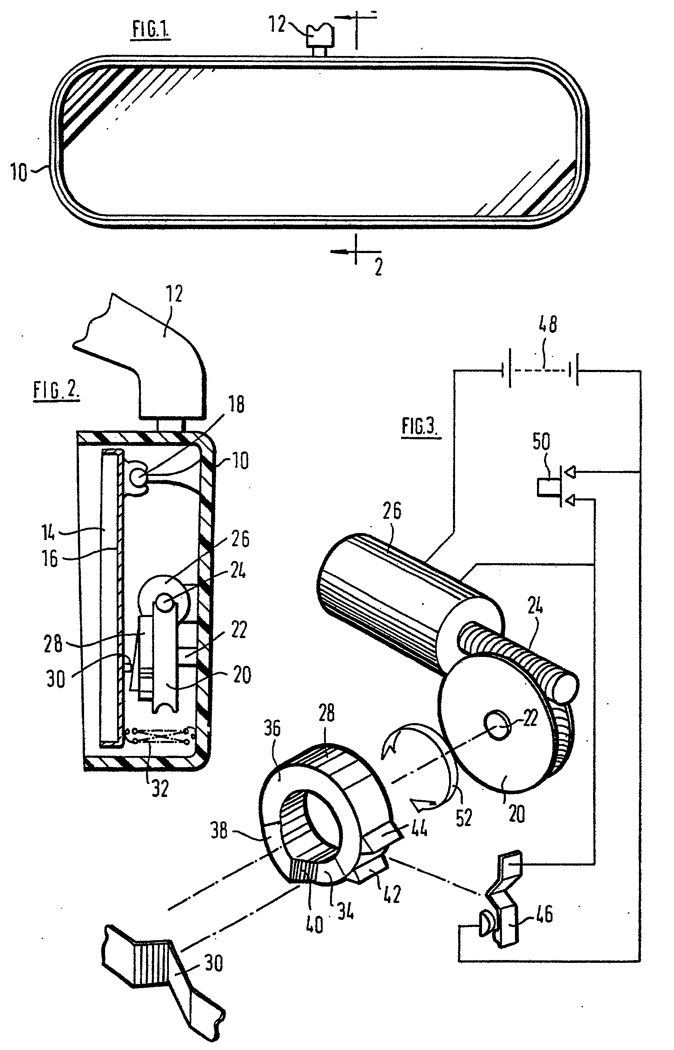

Referring to Figures 1 and 2, an interior rearview mirror for a motor car comprises a housing 10 mounted on a support arm 12. A prism mirror 14, having a reflective coating (not shown) on its second surface, is mounted on a mirror carrier 16 which is supported on a pivot bearing 18 secured to the interior of the housing 10. The bearing 18 allows relative movement about a generally horizontal axis.

A spur gear wheel 20 is journaled on a shaft 22 which projects from the back of the case 10. The spur gear 20 is drivingly engaged by a worm 24 formed on the output shaft of an electric motor 26 which is also mounted on the interior of the case 10. A cam member 28 is secured to a side face of the gear wheel 20 facing the back of the mirror carrier 16. A cam follower 30, secured to the back of the mirror carrier 16, abuts against the cam member 28 and is held in engagement therewith by a compression spring 32.

Turning to Figure 3, the face of the cam member 28 confronting the mirror carrier 16 has a first zone of constant projection 34 which, when engaged by the cam follower 30, allows the bottom of the prism mirror 14 to take up its anti-glare orientation in which its bottom edge is in its position of closest approach to the back of the case 10. Moving round in the anti-clockwise direction, as viewed in Figure 3, a relatively gently sloping ramp 36 leads from the zone 34 to a second zone of constant projection 38 which, when engaged by the cam follower 30, holds the prism mirror 14 in its position of normal orientation, the bottom edge thereof being at its maximum distance from the back of the case 10. A second much steeper ramp 40 leads from the second zone of constant projection 38 back to the first zone of constant projection 34. The ramp 40 extends over an angle of less than 20 degs while the ramp 36 extends over an angle of more than 180 degs.

On its circumferential edge, the cam member 28 has two triangular projections 42 and 44 spaced apart by an angle equal to the angle between the centres of the zones 34 and 38. A normally closed electrical switch 46 is positioned so that its contacts are opened by engagement with one or other of the projections 42 and 44 when the cam follower 30 is on a respective one of the first and second zones of constant projection 34 and 38. The switch 46 is arranged to connect the motor 26 to a battery 48. A manually operable, normally open push-button switch 50 is connected in parallel to the switch 46. The polarity of the connections between the motor 26 and the battery 48 is such that the cam member 28 is rotated in the clockwise direction, as indicated by the arrow 52 in Figure 3.

Movement of the prism mirror 14 between its normal position and its anti-glare position is performed as follows. When the mirror is in its normal position, with the cam follower 30 in engagement with the second zone of constant projection 38, the switch 46 is held in its open position by engagement with the triangular projection 42. If the push-button switch 50 is depressed, energising the motor 26, the cam member 28 starts to rotate and the contacts of the switch 46 close so that rotation continues even if the push-button switch 50 is released. The cam follower 30 moves down the ramp 40, allowing the spring 32 to pull the bottom of the prism mirror 14 towards the back of the case 10. When the cam follower 30 reaches the first zone of constant projection 34, the prism mirror 14 is in its anti-glare position. As the follower 30 moves towards the centre of the zone 34, the projection 44 opens the contacts of the switch 46, stopping the motor 26 and leaving the prism mirror 14 in its anti-glare position.

If the push-button switch 50 is again pressed, the motor 26 is energised and rotation of the cam member 28 recommences. The projection 44 immediately disengages from the switch 46 so that the contacts of the latter close and maintain the electrical supply to the motor 26 even if the push-button switch 50 is released. The cam follower 30 then moves off the zone 34 and on to the relatively gently sloping ramp 36, rotation continuing until the follower 30 has reached the first zone of constant projection 38 whereupon the projection 42 engages with the switch 46 to disconnect the motor so that rotation ceases.

It will be appreciated that the power of the motor 28 required to move the follower 30 up the relatively gentle ramp 36 is much less than would be necessary to move it up the steep ramp 40 against the action of the spring 32. Consequently, the power of the motor 26 can be much less than would be necessary if it had to move the follower 30 up a ramp steep enough to give rapid movement from the normal position to the anti-glare position.

Instead of moving the prism mirror 14 relative to the housing 10 as described above, a similar drive unit to the motor 26 and cam member 28 may be arranged to vary the orientation of the entire housing relative to its support arm. In this case, the prism mirror is mounted fast with the housing.

## Claims

1. An anti-glare mirror for a motor vehicle having a prism mirror (14) incorporated therein and a tilting device for moving the prism mirror (14) between its position of normal use and its anti-glare position, the tilting device including a cam (28) arranged to be driven by an electric motor (26) and engaging w3ith a cam follower (30) coupled to the prism mirror (14), characterised in that the motor (26) is adapted to rotate in one direction only and the cam (28) has a first zone (34) of constant projection which, when engaged by the cam follower (30), cause the prism mirror (14) to take up its normal orientation, a second zone (38) of constant projection which, when engaged by the cam follower (30), causes the prism mirror (14) to take up its anti-glare orientation, a first ramp (40) leading from a first end of the first zone (34) to a first end of the second zone (38) and a second ramp (36) leading from a second end of the second zone (38) to a second end of the first zone (34), and switch means (46) are arranged to interrupt the supply of electric current to the motor (26) when the cam follower (30) is in engagement either with the first zone (34) of constant projection or with the second zone (38) of constant projection.

2. An anti-glare mirror for a motor vehicle according to claim 1, wherein additional cam formations (42, 44) are provided on the cam (28) to operate said switch means (46).

3. An anti-glare mirror for a motor vehicle according to claim 1 or 2, wherein the first ramp (40) slopes at a steeper angle than the second ramp (36) and the motor (26) is arranged to rotate the cam (28) in a direction such that the cam follower (30) engages with the first ramp (40) as the prism mirror (14) is moved from its normal orientation ø its anti-glare orientation.

4. An anti-glare mirror for a motor vehicle according to claim 3, wherein the cam follower (30) is biased into engagement with the cam (28) by a spring (32) which is arranged to be stretched to a greater extent when the prism mirror (14) is in its normal orientation than when it is in its anti-glare orientation.

## Patentansprüche

1. Blendfreier Spiegel für ein Kraftfahrzeug mit einem Prismenspiegel (14), der darin eingebaut ist, und einer Kippvorrichtung zur Bewegung des Prismenspiegels (14) zwischen seiner üblichen Einsatzposition und seiner blendfreien Position, wobei die Kippvorrichtung eine Kurvenscheibe (28) einschließt, die so angeordnet ist, daß sie von einem elektrischen Motor (26) angetrieben wird, und mit einem Kurvenscheibenfolgeglied (30), das an den Prismenspiegel (14) gekoppelt ist, in Eingriff stehend, dadurch gekennzeichnet, daß der Motor (26) angepaßt ist nur in einer Richtung zu drehen und die Kurvenscheibe (28) eine erste Zone (34) konstanter Projektion, die, wenn sie mit dem Kurvenscheibenfolgeglied (30) in Eingriff steht, den Prismenspiegel (14) veranlaßt, seine übliche Ausrichtung einzunehmen, eine zweite Zone (38) konstanter Projektion, die, wenn sie mit dem Kurvenscheibenfolgeglied (30) in Eingriff steht, den Prismenspiegel (14) veranlaßt, seine blendfreie Ausrichtung einzunehmen, eine erste Rampe (40), die von einem ersten Ende der ersten Zone (34) zu einem ersten Ende der zweiten Zone (38) führt und eine zweite Rampe (36) aufweist, die von einem zweiten Ende der zweiten Zone (38) zu einem zweiten Ende der ersten Zone (34) führt, und Schalteinrichtungen (46) angeordnet sind, um die Zufuhr elektrischen Stroms zum Motor (26) zu unterbrechen, wenn das Kurvenscheibenfolgeglied (30) in Eingriff steht, entweder mit der ersten Zone (34) konstanter Projektion oder mit der zweiten Zone (38) konstanter Projektion.

2. Blendfreier Spiegel für ein Kraftfahrzeug nach Anspruch 1, worin zusätzliche Kurvenscheibengebilde (42, 44) auf der Kurvenscheibe (28) vorgesehen sind, um die Schalteinrichtungen (46) zu betreiben.

3. Blendfreier Spiegel für ein Kraftfahrzeug nach den Ansprüchen 1 oder 2, worin die erste Rampe (40) mit einem steileren Winkel als die zweite Rampe (36) abgeschrägt ist und der Motor (26) eingerichtet ist, die Kurvenscheibe (28) in einer Richtung zu drehen, so daß das Kurvenscheibenfolgeglied (30) mit der ersten Rampe (40) in Eingriff steht, während der Prismenspiegel (14) von seiner üblichen Ausrichtung in seine blendfreie Ausrichtung bewegt wird.

4. Blendfreier Spiegel für ein Kraftfahrzeug nach Anspruch 3, worin das Kurvenscheibenfolgeglied (30) zum Eingriff mit der Kurvenscheibe (28) durch eine Feder (32) vorgespannt ist, die so angeordnet ist, daß sie um einen größeren Betrag gedehnt wird, wenn sich der Prismenspiegel (14) in seiner üblichen Ausrichtung befindet als wenn er sich in seiner blendfreien Ausrichtung befindet.

**Revendications**

1. Un miroir anti-éblouissant pour un véhicule à moteur comportant un miroir (14) à prisme qui y est incorporé et un dispositif basculant pour déplacer le miroir (14) à prisme entre sa position d'utilisation normale et sa position anti-éblouissement, le dispositif basculant comportant une came (28) agencée pour être entraînée par un moteur électrique (26) et venant en contact avec une contre-came (30) accouplée au miroir (14) à prisme, caractérisé en ce que le moteur (26) est adapté pour tourner dans une direction seulement et la came (28) possède une première zone (34) en saillie constante qui, quand elle est attaquée par la contre-came (30), amène le miroir (14) à prisme à prendre son orientation normale, une seconde zone (38) de saillie constante qui, quand elle est attaquée par la contre-came (30), amène le miroir (14) à prisme à prendre sa position anti-éblouissement, une première rampe (40) conduisant d'une première extrémité de la première zone (34) à une première extrémité de la seconde zone (38) et une seconde rampe (36) conduisant d'une seconde extrémité de la seconde zone (38) à une seconde extrémié de la première zone (34), et des moyens de commutation (46) sont agencés pour interrompre l'amenée du courant électrique au moteur (26) quand la contre-came (30) est en contact soit avec la première zone (34) de saillie constante soit avec la seconde zone (38) de saillie constante.

2. Un miroir anti-éblouissement pour un véhicule à moteur selon la revendication 1, dans lequel on dispose des structures additionnelles (42, 44) de came sur la came (28) pour actionner lesdits moyens (46) de commutation.

3. Un miroir anti-éblouissement pour un véhicule à moteur selon la revendication 1 ou 2, dans lequel la première rampe (40) présente une pente d'angle plus raide que la seconde rampe (36) et le moteur (26) est agencé pour provoquer la rotation de la came (28) dans une direction telle que la contre-came (30) vient en contact avec la première rampe (40) lorsque le miroir (14) à prisme est déplacé de son orientation normale à son orientation anti-éblouissement.

4. Un miroir anti-éblouissement pour un véhicule à moteur selon la revendication 3, dans lequel la contre-came (30) vient en contact avec la came (28) sous l'action d'un ressort (32) qui est disposé pour être plus tendu quand le miroir (14) est dans son orientation normale que lorsqu'il est dans son orientation anti-éblouissement.

FIG.1.

10

12

2

FIG.2.

12

18

10

14

16

28

30

26

24

22

20

32

FIG.3.

48

50

26

24

22

20

36

28

38

44

52

42

40

34

46

30